Europäisches Patentamt

European Patent Office

Office européen des brevets

(19)

(11) Veröffentlichungsnummer : **0 336 335 B1**

(12) **EUROPÄISCHE PATENTSCHRIFT**

(45) Veröffentlichungstag der Patentschrift :
25.03.92 Patentblatt 92/13

(51) Int. Cl.⁵ : **B23K 26/12,** B23K 26/00,
C04B 35/60, C22C 1/00

(21) Anmeldenummer : 89105809.1

(22) Anmeldetag : 03.04.89

(54) **Vorrichtung zum herstellen amorpher Keramikstoffe oder Metallegierungen.**

(30) Priorität : 07.04.88 LU 87192

(43) Veröffentlichungstag der Anmeldung :
11.10.89 Patentblatt 89/41

(45) Bekanntmachung des Hinweises auf die
Patenterteilung :
25.03.92 Patentblatt 92/13

(84) Benannte Vertragsstaaten :
AT BE CH DE ES FR GB GR IT LI LU NL SE

(56) Entgegenhaltungen :
DE-A- 2 032 577
FR-A- 2 043 169
US-A- 3 476 170
US-A- 3 544 757
TRANSACTIONS OF THE METALLURGICAL
SOCIETY OF AIME, Band 245, Nr. 5, Mai 1969,
Seiten 1055-1061; D.R. HARBUR et al.: "Rapid
quenching drop smasher"

(73) Patentinhaber : **EUROPÄISCHE
ATOMGEMEINSCHAFT (EURATOM)
Bâtiment Jean Monnet Plateau du Kirchberg
L-2920 Luxembourg (LU)**

(72) Erfinder : **Van Geel, Jacobus
Waldenburgerstrasse 10
W-7500 Karlsruhe (DE)**
Erfinder : **Werner, Paul
Veilchenweg 9
W-7521 Dettenheim (DE)**
Erfinder : **Hiernaut, Jean Pol
Hermine-Maierheuser-Strasse 8
W-7515 Linkenheim (DE)**
Erfinder : **Magill, Joseph
Fritz-Erler-Strasse 9
W-7500 Karlsruhe (DE)**

(74) Vertreter : **Weinmiller, Jürgen
Lennéstrasse 9 Postfach 24
W-8133 Feldafing (DE)**

**Beschreibung**

Die Erfindung bezieht sich auf eine Vorrichtung zum Herstellen amorpher Keramikstoffe oder Metallegierungen mit einem Hochdruck-Autoklaven, in dem zuerst ein Rohling der Probe mittels Laserstrahlen bis zur Schmelztemperatur aufgeheizt und anschließend rasch abgekühlt wird.

Amorphe Metallegierungen, auch metallische Gläser genannt, sind seit etwa zwanzig Jahren bekannt. Man versteht darunter einen nicht kristallin erstarrten Festkörper, der eine ungeordnete Struktur besitzt, die durch Abkühlen einer Schmelze erreicht wird. Dabei erfolgt die Abkühlung mit großer Geschwindigkeit (in der Größenordnung von $10^6$ $Ks^{-1}$) auf einen Temperaturwert, bei dem keine Kristallisation mehr möglich ist.

Solche amorphe Substanzen zeigen neue mechanische, elektrische und chemische Eigenschaften, die von den entsprechenden kristallisierten Varianten nicht erreicht werden.

Entscheidend für die Herstellung solcher amorpher Substanzen ist die hohe Abkühlgeschwindigkeit des schmelzflüssigen Materials. So ist ein Verfahren bekannt, in dem das Schmelzgut aus einem induktiv erhitzten Schmelztiegel auf den Umfang einer sich um eine horizontale Achse drehenden Kupferscheibe mit Bandabstreifer fließt. Es ist auch möglich, das Schmelzgut zwischen zwei um horizontale Achsen drehende schmale Kupferscheiben einzuführen oder auf die Scheibenfläche einer um ihre senkrechte Achse drehenden Kupferscheibe aufzubringen.

Es wurde auch bereits vorgeschlagen, elektrisch leitfähiges Schmelzgut behälterfrei magnetisch in wer Schwebe zu halten und induktiv so zu erhitzen, daß Unreinheiten aus dem Schmelztiegel die Legierung nicht beeinträchtigen können. In Weltraumversuchen wurden auch bereits Tropfen eines nicht leitenden Stoffes ohne Schmelztiegel mithilfe von Laserstrahlen erwärmt. Die Tropfen wurden im Raum mithilfe von Luftdüsen in einer definierten Position gehalten.

Aus der DE-A-20 32 577 ist an sich ein Verfahren zum Schmelzen feuerfester Materialien mit Hilfe mindestens zweier durch Fenster in einen Prozeßautoklaven auf einen Rohling gerichteter Laserstrahlen bekanntgeworden, das vorzugzweise im schwerelosen Raum abläuft.

Abgesehen von wem Aufwand, der mit der Verlegung der Produktion solcher Legierungen in wen Weltraum verbunden ist, sind auch die Probleme der Probenpositionierung und der Probenstabilität noch nicht befriedigend gelöst. Aufgabe wer Erfindung ist es daher, eine Vorrichtung zum Herstellen amorpher Substanzen anzuaeben, die im Schwerefeld der Erde solche amorphen Substanzen, und zwar selbst elektrisch nicht leitfähige Substanzen, in großer Reinheit herzustellen erlaubt. Diese Aufgabe wird durch die im Anspruch 1 gekennzeichnete Vorrichtung gelöst. Bezüglich von Merkmalen bevorzugter Ausführungsformen der Erfindung wird auf die Unteransprüche verwiesen.

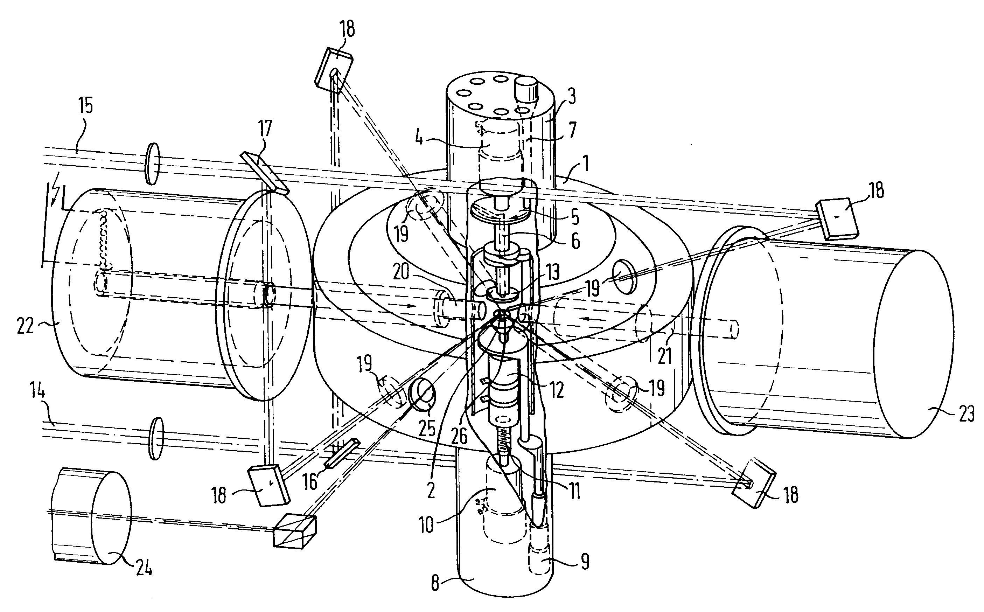

Nachfolgend wird die Erfindung anhand eines bevorzugten Ausführungsbeispiels mithilfe der einzigen Figur erläutert, die schematisch uni in Perspektive eine erfindungsgemäße Vorrichtung zeigt.

Die Vorrichtung enthält als wesentliches Element einen Autoklaven 1 von im wesentlichen zylindrischer Form, in wessen Mittelpunkt sich die Prozeßposition 2 befindet, d.h. die Stelle, an der eine kugelförmige Probe erhitzt und abgekühlt werden soll. Die Probe stammt aus einer Kugelzufuhrvorrichtung 3, die axial an den Autoklaven 1 angebaut ist und eine Folge von Kugeln oder Rohlingen mit der Zusammensetzung der gewünschten Legierung einzeln hintereinander für den Transport in die Prozeßposition 2 bereithält. Hierzu enthält diese Vorrichtung einen Schrittschaltmotor 4 und eine von diesem angetriebene Vereinzelerscheibe 5 sowie einen hohlen Schaft 6, durch den eine aus einem Magazin 7 freigegebene Kugel in die Prozeßposition 2 fallen kann.

Bezüglich der Prozeßposition der Kugelzufuhrvorrichtung 3 entgegengesetzt ist an den Autoklaven 1 ein Gehäuse 8 angebaut, das einen Behälter 9 zum Auffangen der fertigen Proben sowie einen Hubmotor 10 enthält, der über eine Spindel 11 eine akustische Resonanz-Levitationseinrichtung 12 trägt. Letztere befindet sich unter der Prozeßposition 2 und besitzt mehrere elektrisch anregbare Piezokeramikscheiben.

Zwischen der Prozeßposition 2 und der Levitationseinrichtung 12 ist noch ein akustisch durchlässiger Fangkorb 26, und oberhalb der Prozeßposition ist eine Reflektorscheibe 13 eingefügt, durch deren zentrales Loch die Kugel aus dem Magazin 7 zugeführt wird. Die von der Levitationseinrichtung ausgehenden Schallwellen werden in einem resonanzfähigen Abstand von der Reflektorscheibe 13 reflektiert, so daß eine genaue, driftlose, stabile, wiederholbare und schwingungsfreie Positionierung der Kugel ermöglicht wird, ohne daß die Kugel durch Kontakt mit einer Wand verunreinigt würde. Diese Methode arbeitet bei Autoklaven-Drücken von 1 bis 100 MPa (10 Bar bis 1000 Bar) und bei Temperaturen von 1000 K bis 4000 K und mehr sowie mit beliebigen Inertgasen und ermöglicht die berührungsfreie Halterung von sowohl metallischen als auch elektrisch nicht leitenden Materialien. Die Kugeldurchmesser können zwischen 0,2 und 2 mm Durchmesser liegen und die Levitationsdauer kann beliebig ausgedehnt werden und erfordert nur eine geringe Leistung, verglichen etwa mit elektromagnetischer Induktionslevitation. Durch Nachstellen des Hubmotors 10 kann die Kugel exakt in die Prozeßposition levitiert werden.

Die Aufheizung einer Kugel in der Prozeßposition 2 erfolgt über zwei Laserstrahlen 14 und 15, die von einem gemeinsamen Nd-YAG-Generator abgeleitet sein können. Die beiden Laserstrahlen werden je über einen Strahlteilerspiegel 16 und 17 in jeweils zwei Strahlen aufgeteilt, die über Umlenkspiegel 18 und durch Fenster 19 in der Wand des Autoklaven 1 auf die Prozeßposition 2 gerichtet werden, und zwar so, daß sich gegenüberliegende Strahlen nicht blenden und somit nicht die Generatoren durch Blendlicht zerstört werden können.

Vorzugsweise verlaufen je zwei Laserstrahlen entlang den Kanten von zwei gedachten einander gegenüberliegenden vierseitigen Pyramiden, deren Spitzen von der Prozeßposition gebildet werden und deren Kanten ineinander übergehen. Je zwei einer Pyramide zugeordnete Laserstrahlen liegen in einer Ebene, die zur entsprechenden Ebene der anderen Laserstrahlen senkrecht verläuft.

Ebenfalls auf die Prozeßposition, aber senkrecht zur Achse des Autoklaven ausgerichtet, sind zwei Stempel 20 und 21 zueinander fluchtend beweglich gelagert, deren Stirnflächen als Kühlköpfe wirken und einander diametral gegenüber zu beiden Seiten der Prozeßposition liegen. Der Führungskanal für den Stempel 20 bzw. 21 ist dicht in die Wand des Autoklaven 1 eingebaut und befindet sich unter dessen hydrostatischem Gasdruck. Durch gleichzeitiges Anlegen eines elektrischen Impulses an auf die Stempel einwirkende Tauchspulen 22 und 23 werden die beiden Stempel gegenläufig beschleunigt und prallen mit einer Aufprallgeschwindigkeit von z.B. 12,0 msec$^{-1}$ aufeinander. Dabei wird eine schmelzflüssige Kugel, die sich in der Prozeßposition befindet, zwischen den Stirnflächen der Stempel zerquetscht und mit hoher Geschwindigkeit (größer als $10^6$ Ksec$^{-1}$) abgekühlt und zu einem flachen Zylinder von 10 bis 50 µm Dicke gepreßt. Die Abkühlgeschwindigkeit ist über dem Beschleunigungsweg variierbar.

Um den Prozeß genau verfolgen und ggfs. beeinflussen zu können, ist ein Sechswellenlängen-Pyrometer 24 vorgesehen, das durch ein weiteres Fenster 25 in der Autoklavenwand auf die Prozeßposition ausgerichtet ist und die kontinuierliche Messung von Temperaturen zwischen 1200 und 5000 K erlaubt. Es werden beispielsweise die Lichtwellenlängen 500 nm, 600 nm, 680 nm, 800 nm, 960 nm und 1040 nm ausgewertet. Das Gerät kann eine Messung in Mikrosekunden ausführen und räumlich, die minimale Meßfleckgröße betreffend, 50 µm auflösen. Ein solches Pyrometer ist in der Zeitschrift Temperature, 1982, Vol. 5, Seiten 439 bis 446, beschrieben.

Eine nicht dargestellte elektronische Ablaufsteuerung koordiniert die Funktion der Lasergeneratoren, der Levitationseinrichtung und der Abkühlstempel und zwar folgendermaßen:

Zuerst wird das Kugelmagazin 7 der Zufuhrvorrichtung 3 mit etwa 50 kugelförmigen Rohlingen der Probe gefüllt und dann gasdicht verschlossen. Dann wird der Autoklav mit dem für den Prozeß geeigneten Gas gefüllt und auf den gewünschten Druck gebracht. Als nächstes wird durch Betätigen des Motors 4 eine Rohlingskugel in den Zuführungskanal 6 gebracht, von wo sie in den Fangkorb 26 knapp unter der Prozeßposition 2 fällt. Schaltet man nun die piezokeramische Levitationseinrichtung 12 ein, dann gerät der Rohling in der Prozeßposition in einen Schwebezustand, der ggfs. durch Nachjustieren mithilfe des Hubmotors 10 verändert werden kann. Nun werden kurzzeitig und gleichzeitig die beiden Laser 14 und 15 aktiviert, wobei die Impulsdauer und die Impulsenergie von der gewünschten Temperatur abhängen. Der Rohling schmilzt dann in einer reproduzierbaren kurzen Zeit, so daß nun die Tauchspulen 22 und 23 aktiviert werden können und die Stempel 20 und 21 die schmelzflüssige Probe zwischen sich zerquetschen können. Nach dem Zurückschnellen der Stempel und dem Abschalten der Levitationseinrichtung fällt die fertige Probe über einen Trichter in den Auffangbehälter 9 im unteren Teil der Vorrichtung.

Der ganze Prozeß kann über das Pyrometer 24 verfolgt werden.

Danach kann sofort der zweite Rohling aus dem Magazin 7 in die Prozeßposition 2 befördert und dort in gleicher Weise bearbeitet werden.

Es ist zu bemerken, daß die Herstellung einer Probe nur Bruchteile einer Sekunde in Anspruch nimmt und daß ebensoviele Proben ohne Unterbrechung hergestellt werden, wie das Magazin 7 und der Auffangbehälter 9 fassen. Durch Optimierung des zeitlichen Ablaufs zwischen Erhitzen und Abkühlen kann die Verdampfung der Probe vor dem Abkühlen nach Wunsch völlig verhindert werden.

Die Vorrichtung eignet sich für Forschungslabors, in denen beispielsweise Serien von Rohlingen unterschiedlicher Zusammensetzung in amorphe Legierungen für Reihenuntersuchungen umgewandelt werden. Auch die Temperatur- und Zeitparameter können von Kugel zu Kugel durch geeignete Programmierung der Ablaufsteuerung variiert werden. Die Erfindung ist aber auch zur Herstellung von glasartigen Legierungen in Plättchenform für industrielle Zwecke geeignet, sofern dem Magazin 7 und dem Auffangbehälter 9 ausreichend große Kapazitäten verliehen werden.

**Patentansprüche**

1. Vorrichtung zum Herstellen amorpher Keramikstoffe oder Metallegierungen, mit einem Hochdruck-Autoklaven, in dem zuerst ein Rohling der Probe mittels Laserstrahl bis zur Schmelztemperatur aufgeheizt und anschließend rasch abgekühlt wird, wobei ein Prozeßposition (2) im Schnittpunkt von mindestens zwei Laserstrahlen (14, 15) liegt, die durch Fenster (19) in den Autoklaven eindringen, um die Probe aufzuheizen, **dadurch gekennzeichnet,** daß

– unterhalb der Prozeßposition (2), in der die Probe aufgeheizt wird und abgekühlt wird, eine akustische Levitationseinrichtung (12) liegt, die von einer piezoelektrisch angeregten Schallquelle gebildet wird und die Probe berührungsfrei in der Prozeßposition (2) hält,

– zwei Stempel (20, 21) einander zu beiden Seiten der Prozeßposition (2) gegenüberliegend im Autoklaven (1) angeordnet sind, die elektromagnetisch gegeneinander gestoßen werden können, um die Probe zwischen sich zu zerquetschen und dabei rasch abzukühlen.

2. Vorrichtung nach Anspruch 1, dadurch gekennzeichnet, daß die Prozeßposition (2) im Schnittpunkt von vier Laserstrahlen liegt, wobei jeder der Laserstrahlen entlang der Kante einer gedachten vierseitigen Pyramide verläuft.

3. Vorrichtung nach Anspruch 2, dadurch gekennzeichnet, daß je zwei gegenüberliegende Laserstrahlen von einem gemeinsamen Lasergenerator (14 bzw. 15) abgeleitet werden.

4. Vorrichtung nach einem der Ansprüche 1 bis 3, dadurch gekennzeichnet, daß ein Mehrwellenlängen-Pyrometer (24) durch ein Fenster (25) in der Wand des Autoklaven (1) hindurch auf die Prozeßposition (2) gerichtet ist.

5. Vorrichtung nach einem der Ansprüche 1 bis 4, dadurch gekennzeichnet, daß eine programmierbare Ablaufsteuerung vorgesehen ist, die die Lasergeneratoren, die Levitationseinrichtung (12) und die Stempel (20, 21) steuert.

6. Vorrichtung nach einem der Ansprüche 1 bis 5, dadurch gekennzeichnet, daß ein akustisch durchlässiger Fangkorb zwischen der Levitationseinrichtung (12) und der Prozeßposition (2) angeordnet ist.

## Claims

1. A device for producing amorphous ceramic products or metal alloys, comprising a high pressure autoclave in which firstly a preform of the sample is heated by means of laser beams up to its melting temperature and is then rapidly cooled down, the process position (2) being disposed in the intersection point of at least two laser beams (14, 15), which penetrate into the autoclave via windows (19) in view of heating up the sample, characterized in that

– below the process position (2), in which the sample is heated up and cooled down, an acoustic levitation installation (12) is disposed, which is constituted by a piezoelectrically excited sound source and which levitates the sample in the process position (2) without contacting it,

– two stamps (20, 21) are disposed facing each other on either side of the process position (2) in the autoclave (1), which are susceptible to be electromagnetically pushed towards each other, in order to crush the sample therebetween and thus rapidly cool it down.

2. A device according to claim 1, characterized in that the process position (2) is situated in the intersection point of four laser beams, each of the laser beams running along the edge of an imagined four-sided pyramid.

3. A device according to claim 2, characterized in that respectively two opposed laser beams are derived from a common laser generator (14 resp. 15).

4. A device according to one of claims 1 to 3, characterized in that a multiwavelengths pyrometer (24) is directed onto the process position (2) through a window (25) in the wall of the autoclave (1).

5. A device according to one of claims 1 to 4, characterized in that a programmable process control unit is provided, which controls the laser generators, the levitation installation (12) and the stamps (20, 21).

6. A device according to one of claims 1 to 5, characterized in that an acoustically permeable catch basket is disposed between the levitation installation (12) and the process position (2).

## Revendications

1. Dispositif de fabrication de matériaux céramiques ou d'alliages métalliques amorphes dans un autoclave haute pression, dans lequel une préforme de l'échantillon est d'abord chauffée par des rayons laser jusqu'à la température de fusion, et puis elle est refroidie rapidement, une position de traitement (2) étant disposée dans le point d'intersection de deux rayons laser (14, 15), qui pénètrent dans l'autoclave à travers des fenêtres (19), pour chauffer l'échantillon, caractérisé en ce que

– en-dessous de la position de traitement (2), dans laquelle l'échantillon est chauffé et refroidi, on prévoit un dispositif acoustique de lévitation (12), qui est constitué par une source de son excitée piézoélectriquement et qui tient l'échantillon sans contact dans la position de traitement (2),

– deux pistons (20, 21) sont disposés dans l'autoclave (1) des deux côtés de la position de traitement (2) et se faisant face, ces pistons pouvant être poussés l'un contre l'autre par des forces électromagnétiques pour écraser l'échantillon entre eux et le refroidir en même temps rapidement.

2. Dispositif selon la revendication 1, caractérisé en ce que la position de traitement (2) se trouve dans le point d'intersection de quatre rayons laser, chacun des rayons laser étant disposé le long du bord d'une pyramide quadrilatérale imaginée.

3. Dispositif selon la revendication 2, caractérisé en ce que deux rayons laser qui se font face proviennent d'un générateur laser commun (14 et 15) respectivement.

4. Dispoisitif selon l'une des revendications 1 à 3, caractérisé en ce qu'un pyromètre à six longueurs d'onde (24) vis la position de traitement (2) à travers une fenêtre (25) dans la paroi de l'autoclave (1).

5. Dispositif selon l'une des revendications 1 à 4, caractérisé en ce qu'une commande programmable est prévue, qui commande les générateurs laser, le dispositif de lévitation (12) et les pistons (20, 21).

6. Dispositif selon l'une des revendications 1 à 5, caractérisé en ce qu'une corbeille de réception acoustiquement transparente est disposée entre le dispositif de lévitation (12) et la position de traitement (2).